# EUROPÄISCHE PATENTANMELDUNG

(11) **EP 0 895 711 A1**
(43) Veröffentlichungstag der Anmeldung: **10.02.1999**
(21) Anmeldenummer: 98113981.9
(22) Anmeldetag: 27.07.1998
(51) Int. Cl.: A01D 41/12, A01F 12/40

(54) **Landwirtschaftliche Erntemaschine**

(30) Priorität: 06.08.1997 DE 29714048 U
(71) Anmelder: SAME DEUTZ-FAHR S.P.A., 24047 Treviglio (Bergamo) (IT)
(72) Erfinder: Von Allwörden, Wilhelm, 89168 Oberstotzingen (DE); Hartshauser, Walter, 89423 Gundelfingen (DE)
(74) Vertreter: Quinterno, Giuseppe

(57) **Zusammenfassung**

Die landwirtschaftliche Erntemaschine, insbesondere Mähdrescher, ist mit mindestens einer Einzugseinrichtung, einer Bearbeitungseinrichtung, einem Schüttler (11) und einem Auslaß (7) für das bearbeitete Erntegut, einem Rahmen mit einer Verkleidung zur Aufnahme, Befestigung und Abdeckung zumindest eines Teils der vorgenannten Bauteile versehen und ist dadurch gekennzeichnet, daß die Verkleidung im Bereich des Ausgangs des Schüttlers (11) als Haube (12) ausgebildet ist, die zumindest eine Rückwand (13) und Seitenwände (14) aufweist, und daß die Haube (12) insgesamt aufschwenkbar ist.

## Beschreibung

Die Erfindung betrifft eine landwirtschaftliche Erntemaschine, insbesondere Mähdrescher, mit mindestens einer Einzugseinrichtung, einer Bearbeitungseinrichtung, einem Schüttler und einem Auslaß für das bearbeitete Erntegut, wobei die Erntemaschine einen Rahmen mit einer Verkleidung zur Aufnahme, Befestigung und Abdeckung zumindest eines Teils der vorgenannten Bauteile aufweist.

Derartige Maschinen sind allgemein bekannt. In dem Prospekt "FIATAGRI L521 INTEGRALE, L624 INTEGRALE" sind Mähdrescher beschrieben, die ausgangsseitig des Schüttlers je einen Häcksler aufweisen, der über eine Elektromagnetkupplung einschaltbar ist. Durch Umlegen eines Hebels kann von Langstrohablage auf Häckslerbetrieb umgeschaltet werden Dadurch wird die Förderbahn des Erntegutes beeinflußt und gleichzeitig die Elektromagnetkupplung ein- oder ausgeschaltet. Dabei sind diese Bauteile im wesentlichen einer festen Karosserie-Verkleidung angeordnet und der Schüttler bzw. der Häcksler ggf. über eine Klappe in der Verkleidung zugänglich.

Der Erfindung liegt die Aufgabe zugrunde, eine landwirtschaftliche Erntemaschine bereitzustellen, die insbesondere im hinteren Bereich des Schüttlers - besonders auch dann, wenn ein Häcksler angebaut ist, - eine gute Zugänglichkeit aufweist.

Diese Aufgabe wird dadurch gelöst, daß die Verkleidung im Bereich des Ausgangs des Schüttlers als Haube ausgebildet ist, die zumindest eine Rückwand und Seitenwände aufweist, und daß die Haube insgesamt aufschwenkbar ist. Durch diese Ausbildung wird ein großflächiger Zugang zu dem Schüttler und - wenn angebaut - zu dem Häcksler auch von den Seiten der Erntemaschine erreicht, der insbesondere bei Reinigungsarbeiten, Wartungsarbeiten oder der Beseitigung möglicherweise in diesem Bereich auftretender Verstopfungen vorteilhaft ist. Während bei herkömmlichen Erntemaschinen - wie zuvor teilweise beschrieben - hier maximal nur eine Einstiegluke oder eine Klappe vorhanden war, durch die die zu reinigenden Bauteile schwerlich erreichbar waren, ist nun durch die aufschwenkbare Haube ein dreiseitiger Zugang zu dem Schüttler und dem Häcksler gegeben. Somit können beispielsweise Verstopfungen ohne weiteres gleichzeitig von mehreren Bedienpersonen schnell beseitigt werden. Dadurch wird die hierdurch hervorgerufene und unerwünschte Stillstandzeit weiter verkürzt.

In Weiterbildung der Erfindung ist der Häcksler ebenfalls auf- oder abschwenkbar. Dabei ist vorgesehen, daß dieser Vorgang separat von dem Aufschwenkvorgang der Haube vorgenommen werden kann. Dadurch sind insbesondere die Bereiche des Häckslers einfach zugänglich.

In weiterer Ausgestaltung der Erfindung sind die Haube und/oder der Häcksler zumindest hydraulisch oder pneumatisch unterstützt aufschwenkbar. Dies können beispielsweise Gasdruckzylinder sein, oder aber auch komplett pneumatisch oder hydraulisch gesteuerte Öffnungszylinder.

In Fortbildung der Erfindung ist der Antrieb des Häckslers von dessen Antriebswelle entkuppelbar. Dieser Entkuppelvorgang, der nicht die bekannte Zu- oder Abschaltung des Häckslers betrifft, wird dann angewendet, wenn beim Aufschwenkvorgang des Häckslers dessen Antriebsriemen nicht einfach mitgeschwenkt werden kann. In diesem Falle ist dann vorgesehen, daß beispielsweise das Antriebsriemenrad von der Welle des Häckslers entkuppelbar ist, so daß der eigentliche Antriebsstrang, in seiner normalen Position verbleibt und nur der Häcksler verschwenkt wird. Somit ist auch die Zugänglichkeit des Antriebsriemens verbessert.

In Weiterbildung der Erfindung sind in der Haube Reinigungswerkzeuge befestigbar. Somit sind diese bei Bedarf sofort greifbar.

Weiterhin ist vorgesehen, daß unter Haube die Umschalteinrichtung für die Förderbahn des Erntegutes durch oder unter Umgehung des Häcksler angeordnet ist. Diese ist damit auch sehr gut zugänglich.

Schließlich ist es vorgesehen, daß sich die Haube zum hinteren Ende der Erntemaschine hin verjüngt. Dies stellt im wesentlichen ein gestalterisches Merkmal dar.

Vorteilhafte Weiterbildungen der Erfindung sind der Zeichnungsbeschreibung zu entnehmen, in der ein Ausführungsbeispiel der Erfindung näher beschrieben ist.

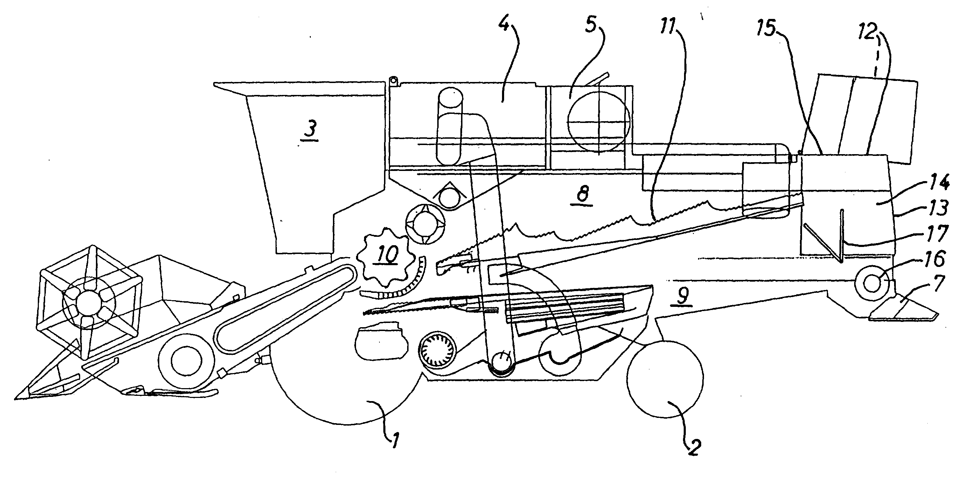

Die Zeichnung zeigt einen Mähdrescher mit einer vorne am Rahmen des Mähdreschers angelenkten Fördereinrichtung und Einführeinrichtung. Der Rahmen weist vordere Antriebsräder 1 und eine hintere Radachse mit Lenkrädern 2 auf. Auf dem Rahmen ist im Bereich vor den Antriebsrädern 1 eine Fahrerkabine 3 angeordnet. Direkt dahinter befindet sich der Korntank 4, an den sich hinter einer Seitenverkleidung der Antriebsmotor 5 anschließt. Hinter dem Antriebsmotor 5 kann der Kraftstofftank angeordnet sein. Im hinteren Bereich des Mähdreschers befindet sich schließlich ein Auslaß 7 für den Teil des Erntegutes, der von den Körnern als nicht verwertbarer Anteil abgetrennt ist. Hinter seitlichen Abdeckungen 8, 9 befindet sich die Drescheinrichtung 10, der Schüttler 11, eine Vorbereitungsfläche, eine Siebeinrichtung, ein Rücklaufboden und ein Windgebläse. Dabei ist insbesondere der Schüttler 11, der von einem mittleren Bereich des Mähdreschers nach hinten hin ansteigt, so ausgelegt, daß er die gesamte Breite des Mähdreschers ausmachen kann. Dies wird insbesondere durch die Anordnung des Kraftstofftanks hinter dem Antriebsmotor möglich.

Im Bereich des Ausgangs des Schüttlers 11 ist eine Haube 12 angebracht, die in ihrer normalen eingeschwenkten, also geschlossenen Position und in ihrer aufgeschwenkten Position dargestellt ist. Die Haube weist eine Rückwand 13, Seitenwände 14 und eine obere Abdeckwand 15 auf. Im aufgeschwenkten Zustand der Haube 12 ist ein direkter Zugang zu dem hinteren Bereich des Schüttlers 11, einer Umschalteinrichtung 17 für die Förderbahn des nicht verwertbaren Erntegutes für Langstrohablage oder Zuführung zu einem Häcksler 16 möglich.

## Patentansprüche

1. Landwirtschaftliche Erntemaschine, insbesondere Mähdrescher, mit mindestens einer Einzugseinrichtung, einer Bearbeitungseinrichtung, einem Schüttler und einem Auslaß für das bearbeitete Erntegut, wobei die Erntemaschine einen Rahmen mit einer Verkleidung zur Aufnahme, Befestigung und Abdeckung zumindest eines Teils der vorgenannten Bauteile aufweist,
**dadurch gekennzeichnet**, daß die Verkleidung im Bereich des Ausgangs des Schüttlers (11) als Haube (12) ausgebildet ist, die zumindest eine Rückwand (13) und Seitenwände (14) aufweist, und daß die Haube (12) insgesamt aufschwenkbar ist.

2. Landwirtschaftliche Erntemaschine nach Anspruch 1,
**dadurch gekennzeichnet**, daß die Haube (12) in ihrer aufgeschwenkten Stellung einen direkten dreiseitigen Zugang zu der Förderbahn des bearbeiteten Ernteguts ermöglicht.

3. Landwirtschaftliche Erntemaschine nach einem der vorherigen Ansprüche, wobei dem Auslaß ein Häcksler zugeordnet ist
**dadurch gekennzeichnet**, daß der Häcksler (16) auf- oder abschwenkbar ist.

4. Landwirtschaftliche Erntemaschine nach einem der vorherigen Ansprüche,
**dadurch gekennzeichnet**, daß der Häcksler (16) und/oder die Haube (12) zumindest hydraulisch oder pneumatisch unterstützt aufschwenkbar sind.

5. Landwirtschaftliche Erntemaschine nach einem der vorherigen Ansprüche,
**dadurch gekennzeichnet**, daß der Antrieb des Häckslers (16) von dem Häcksler (16) entkuppelbar ist.

6. Landwirtschaftliche Erntemaschine nach einem der vorherigen Ansprüche,
**dadurch gekennzeichnet**, daß in der Haube (12) Reinigungswerkzeuge befestigbar sind.

7. Landwirtschaftliche Erntemaschine nach einem der vorherigen Ansprüche,
**dadurch gekennzeichnet**, daß unter der Haube (12) eine Umschalteinrichtung (15) für die Förderung des Erntestroms durch oder unter Umgehung des Häckslers (12) angeordnet ist.

8. Landwirtschaftliche Erntemaschine nach einem der vorherigen Ansprüche,
**dadurch gekennzeichnet**, daß die Haube (12) sich zum hinteren Ende verjüngt.
